# EUROPEAN PATENT SPECIFICATION

(11) **EP 0 453 086 B1**
(45) Date of publication and mention of the grant of the patent: **10.09.1997**
(21) Application number: 91302172.1
(22) Date of filing: 14.03.1991
(51) Int. Cl.: A01N 33/12

(54) **Biocide composition**
Biozide Zusammensetzung
Composition biocide

(30) Priority: 16.04.1990 JP 99863/90
(43) Date of publication of application: 23.10.1991
(73) Proprietor: KAO CORPORATION, Chuo-ku Tokyo (JP)
(72) Inventor: Hioki, Yuichi, Wakayama-shi, Wakayama (JP); Kurita, Kazuhiko, Wakayama-shi, Wakayama (JP); Iwasaki, Tetsuji, Wakayama-shi, Wakayama (JP)
(74) Representative: Bannerman, David Gardner

(56) References cited:
- EP-A- 0 173 964
- EP-A- 0 236 689
- DE-A- 3 642 371
- FR-A- 2 143 449
- FR-A- 2 600 494
- GB-A- 2 010 851
- US-A- 4 844 734
- DATABASE WPIL, Derwent Publications Ltd., London, GB; accession no. 90-128471, week 9017
- PATENT ABSTRACTS OF JAPAN vol. 14, no. 7 (C-673)(3950) 10 January 1990
- PATENT ABSTRACTS OF JAPAN vol. 14, no. 526 (C-779)(4469) 19 November 1990
- PATENT ABSTRACTS OF JAPAN vol. 9, no. 112 (C-281)(1835) 16 May 1985

## Description

This invention relates to an agricultural and horticultural biocide composition. More particularly, it relates to an agricultural and horticultural biocide composition in which, by virtue of the presence of a specified biocide, the dose of an agricultural chemical can be reduced and the expression of resistance to the biocide by disease causing agents and insect pests can be suppressed.

Common agricultural and horticultural biocides include bactericides, insecticides, acaricides and herbicides. However, those which inhibit specific enzymatic/metabolic systems frequently suffer from disadvantages in that they become increasingly ineffective against disease causing microorganisms and insect pests which have acquired a resistance against the same. As a result, it is necessary to use larger amounts of the biocide until its application becomes impractical.

A biocide having a low basic activity will need to be applied in a large amount in order to completely control diseases and insect pests. However the application of a large amount of an agricultural chemical not only causes environmental pollution but also restricts the range of available agricultural chemicals. There is therefore, a need for a highly safe chemical which can suppress the expression of resistance to a biocide in disease causing agents and insect pests and enhance the effect thereof. US-A-4844734 and FR-A-2600494 both disclose activators for biocides which are quaternary ammonium salts.

The present inventors have found that a compound obtained by substituting a counter ion of a quaternary ammonium salt with an anion residue of an acid of an anionic oligomer or polymer having a molecular weight of from 300 to 20,000 can enhance the effect of a biocide and unexpectedly improve its effect on disease causing agents and insect pests having a resistance to various biocides without any adverse effects on plants.

Accordingly, the present invention provides a biocide composition which comprises a biocide activated by a biocide activator having the formula (1): 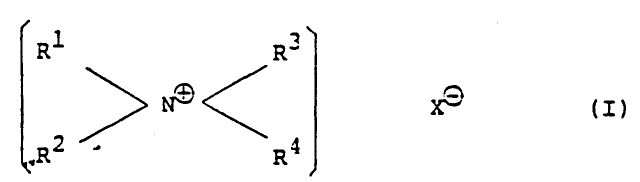 wherein at least one of R¹, R², and R³ represents a straight-chain or branched alkyl or alkenyl group having 8 to 30 carbon atoms while other(s) represent a group or a combination selected from among -CH₃, -CH₂CH₃, 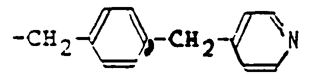 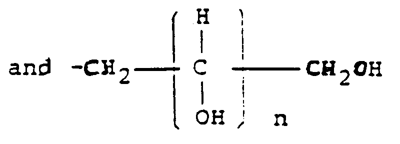 groups (wherein n ranges from 1 to 5;
R⁴ represents a -CH₃ or -CH₂CH₃ group; and a counter ion X^{⊖} is an anion residue of an acid of an anionic oligomer or polymer having an average molecular weight of from 300 to 20,000 and selected from:
1) a polymer comprising one or more monomers selected from unsaturated carboxylic acids and derivatives thereof as an essential component;
2) a polymer comprising styrenesulfonic acid as an essential constituting monomer; and
3) a formalin condensate of a sulfonate of a polycyclic aromatic compound optionally having a hydrocarbon group as a substituent.

The biocide composition is preferably a solution or a suspension and it is preferable that the solution or suspension comprises 0.01 to 60 percent by weight of the biocide activator.

The quaternary ammonium salt represented by the general formula (I) is characterised by its counter ion. It is important that the counter ion X^{⊖} is an anion residue of an acid of an anionic oligomer or polymer having a molecular weight of from 300 to 20,000 and that said anionic oligomer or polymer has an anion residue of an acid which may fundamentally give the counter ion X^{⊖}. The anionic oligomers or polymers to be used in the present invention, as specified in the above items 1) to 3), will now be described in detail.
1) A polymer comprising one or more monomers selected from among unsaturated carboxylic acids and derivatives thereof as an essential component.
   Preferred examples of the monomer to be used in the preparation of the polymer 1) include unsaturated monocarboxylic acids such as acrylic acid and methacrylic acid, unsaturated dicarboxylic acid such as maleic acid and derivatives thereof such as alkyl esters of the above-mentioned acid (for example, methyl esters) and polyoxyethylene esters. In addition to these monomers, copolymerizable monomers such as vinyl acetate, isobutylene, diisobutylene and styrene may be used.
   These monomers may be polymerized by conventional methods. Neither the ratio of the monomers nor the degree of polymerization is particularly restricted.
   Preferred examples thereof include polyacrylic acid, polymethacrylic acid, acrylic acid/methacrylic acid copolymer, acrylic acid/polyoxyethylene methacrylate copolymer, acrylic acid/methyl acrylate copolymer, acrylic acid/vinyl acetate copolymer, acrylic acid/maleic acid copolymer, maleic acid/isobutylene copolymer and maleic acid/styrene copolymer. Two or more polymers selected from the above compounds may be employed. Furthermore, they may be converted into salts of alkali metals, ammonia or organic amines in such a manner so as not to deteriorate the performance thereof.
2) A polymer comprising styrenesulfonic acid as an essential constituting monomer.
   The homopolymer of styrenesulfonic acid may be prepared by polymerising styrenesulfonic acid or by sulfonating polystyrene. Styrenesulfonic acid polymer has a skeleton represented by the following formula: 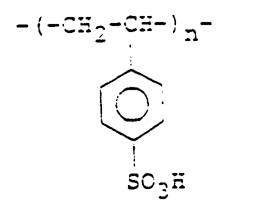 The molecular weight thereof may range from 300 to 20,000, and preferably from 300 to 10,000.
   Alternatively, a copolymer of styrenesulfonic acid with other monomer(s) may be prepared by copolymerizing styrenesulfonic acid with the monomer(s) or by sulfonating a copolymer of styrene with other monomer(s). Examples of the preferred monomers for copolymerization include hydrophobic monomers such as alkyl acrylates, alkyl methacrylates, vinyl alkyl ethers, vinyl acetate, ethylene, propylene, butylene, butadiene, diisobutylene, vinyl chloride, vinylidene chloride, acrylonitrile and styrene and hydrophilic ones such as acrylic acid, methacrylic acid, maleic acid, fumaric acid, maleic anhydride, vinyl alcohol, acrylamide, methacrylamide, diacetone acrylamide, N-vinylpyrrolidone, 2-acrylamido-2-methylpropanesulfonic acid, methacrylsulfonic acid, xylenesulfonic acid and naphthalenesulfonic acid. Preferred examples of the copolymer include (meth)acrylic acid/styrenesulfonic acid copolymer. The molar ratio of the (meth)acrylic acid to the styrenesulfonic acid in the copolymer may range from 1/10 to 10/1, and preferably from 1/3 to 4/1. The average molecular weight of the copolymer may range from 300 to 20,000, and preferably from 1,000 to 10,000. The copolymer may further contain a neutralized portion of a salt such as sodium salt, potassium salt, ammonium salt, diethanolamine salt, triethanolamine salt, monoisopropanolamine salt, diisopropanolamine salt, triisopropanolamine salt or 2-amino-2-methylpropane-1,3-diol salt, so long as the performance of the copolymer is not deteriorated thereby.
3) A formalin condensate of a sulfonate of a polycyclic aromatic compound optionally having a hydrocarbon group as a substituent.

Preferred examples thereof include formalin condensates of petroleum sulfonic acid derivatives, ligninsulfonic acid derivatives, naphthalenesulfonic acid derivatives, xylenesulfonic acid derivatives and alkylbenzenesulfonic acid derivatives.

The above-mentioned compound 3) may be obtained by, for example, sulfonating a compound such as naphthalene, an alkyl-substituted benzene, an alkyl-substituted naphthalene, anthracene, an alkyl-substituted anthracene, lignin or a compound contained in a petroleum residue having an aromatic ring by a conventional method and then condensing the obtained sulfonate with formalin. In this case, the degree of condensation is preferably 2 or above, and more preferably from 3 to 30. When the molecular weight of the obtained condensate is smaller than 300, the condensation can give only a limited effect, causing some problems in practice.

Preferred examples of the aromatic compound to be used in the above process include lignin, xylene, toluene, naphthalene and alkyl-naphthalenes having an alkyl group of 1 to 6 carbon atoms. Mixtures thereof may also be employed.

Furthermore, a salt of an alkali metal such as sodium or potassium, an alkaline earth metal such as calcium, an amine or ammonium may be used, so long as that does not adversely affect the performance of the obtained compound.

The quaternary ammonium salt represented by the general formula 1) may be prepared by, for example, converting a quaternary ammonium salt having a halogen atom as a counter ion into a quaternary ammonium of OH-type by using an ion exchange resin and then neutralizing the obtained product with an oligomer or a polymer having an anion residue of the acid as described above. It may additionally include an alkali metal salt, an amine salt or an organic amine salt, so long as its performance is not adversely affected.

The biocide activator used in the present invention may be mixed and diluted with the biocide and then applied to plants or soil. In the application thereof, it is preferable to use the above-mentioned quaternary ammonium salt, as an essential ingredient, at a concentration of from 0.01 to 60% by weight.

The composition of the present invention may be applied as an aqueous solution, wettable powder, granules, dust, emulsion, or an oil or paste. Therefore other additives, for example, salts, surfactants, thickeners and carriers may be added depending on the selected formulation.

Examples of preferred salt additives include metal salts of carboxylic acids, such as succinates, malonates, citrates, gluconates and glutarates, metal salts of phosphoric acid compounds such as tripolyphosphates and hexametaphosphates and inorganic salts such as Na₂SO₄ and MgSO₄. Either one of these salts or a mixture thereof may be employed.

As the surfactants, nonionic and anionic surfactants may be used. Preferred examples of the nonionic and/or anionic surfactants include nonionic surfactants such as polyoxyethylene (hereinafter simply referred to as POE) alkyl (carbon atom number: 6 - 22) ethers, POE alkyl (carbon atom number: 4 - 18) phenol ethers, polyoxypropylene polyoxyethylene (block or random) alkyl ethers, POE phenylphenol ether, POE styrenated phenol ether and POE tribenzylphenol ether; and anionic surfactants such as ligninsulfonate salts, alkylbenzenesulfonate salts, alkylsulfonates salts, POE alkylsulfonate salts, POE alkylphenyl ether sulfonate salts, POE alkylphenyl ether phosphate salts, POE phenylphenol ether sulfonate salts, POE phenylphenol ether phosphate salts, naphthalenesulfonate salts, naphthalenesulfonic acid/formalin condensate, POE tribenzylphenol ether sulfonate salts and POE tribenzylphenylphenol ether phosphate salts. These surfactants can be used singly or as a mixture.

The content of each of these surfactants in the biocide compositions may range from 0 to 20% by weight, and preferably from 1 to 10% by weight.

Natural semisynthetic or synthetic water-soluble thickeners may be used. Preferred examples of the natural thickeners include xanthan gum and Zanflo originating from microorganisms and pectin, gum arabic and guar gum originating from plants. Preferred examples of the semisynthetic thickeners include methylated products, carboxyalkyated products and hydroxyalkylated products of cellulose or starch derivatives (including methylcellulose, carboxymethyl-cellulose and hydroxymethylcellulose) and sorbitol. Preferred examples of the synthetic thickeners include polyacrylate salts, polymaleate salts, polyvinylpyrrolidone and EO adduct of pentaerythritol.

The above water-soluble thickeners may be used in the biocide in an amount of from approximately 0 to 3.0% by weight, and preferably from 0.05 to 0.5% weight.

As the carrier, inorganic mineral salts and water-insoluble polymers may be employed. Preferred examples of the inorganic mineral salts include inorganic salt clay, talc, bentonite, calcium carbonate, diatomaceous earth and white carbon. Preferred examples of the water-insoluble polymers include styrenesulfonic acid, 2-acrylamide, 2-methylpropanesulfonic acid, xylenesulfonic acid, naphthalenesulfonic acid and polymers or salts thereof. Further, copolymers obtained by copolymerizing the above-mentioned copolymer with a hydrophobic monomer such as an alkyl acrylate, an alkyl methacrylate, vinyl alkyl ethers, vinyl acetate, ethylene, propylene, butylene, butadiene, diisobutylene, vinyl chloride, vinylidene chloride, acrylonitrile or styrene; or a hydrophilic monomer such as acrylic acid, methacrylic acid, maleic acid, fumaric acid, maleic anhydride, vinyl alcohol, acrylamide, methacrylamide, diacetone acrylamide or N-vinylpyrrolidone may be employed.

The biocide activator used in the present invention exhibits no adverse effect on various crops and thus can be applied safely.

Examples of preferred biocides for activation by the biocide activator specified in the present invention are as follows:

Examples of bactericides include Dithane® (zinc ethylenebisdithiocarbamate), Maneb (manganese ethylenebisdithiocarbamate), Thiuram [bis(dimethylthiocarbamoyl) disulfide), Manzeb (zinc/manganese ethylenebisdithiocarbamate), Bisdaithane® (bisdimethyldithiocarbamoylzinc ethylenebisdithiocarbamate), Propineb (zinc propylenebisdithiocarbamate), benzimidazole derivatives such as Benomyl [methyl 1-(butylcarbamoyl)-2-benzimidazolecarbamate) and Thiophanate-methyl[1,2-bis(3-methoxycarbonyl-2-thioureido)benzene], as well as Vinclozolin [3-(3,5-dichloropheyl)-5-methyl-5-vinyl-1,3-oxazolidine-2,4-dione], Iprodione [3-(3,5-dichlorophenyl)-N-isopropyl-2,4-dioxoimidazolidine-1-carboxamide], procymidone [N-(3,5-dichlorophenyl)-1,2-dimethylcyclopropane-1,2-dicarboximide], Triazine [2,4-dichloro-6-(2-chloroanilino)-1,3,5-triazine], triflumizole [(E)-4-chloro-α,α,α-trifluoro-N-(1-imidazol-1-yl-2-propoxyethylidane)-o-toluidine], Metalaxyl [methyl N-(2-methoxyacetyl)-N-(2,6-xylyl)-D,L-araninate], bitertanol [all-rac-1-(biphenyl-4-yloxy)-3,3-dimethyl-1-(1H-1,2,4-triazol-1-yl)2-butan-2-ol], triadimefon [1-(4-chlorophenoxy)-3,3-dimethyl-1-(1,2,4-triazol-1-yl)-2-butanonel, Isoprothiolane (diisopropyl 1,3-dithiolan-2-ylidenemalonate), Daconil (tetrachloroisophthalonitrile), Pansoil® (5-ethoxy-3-trichloromethyl-1,2,4-thiadiazole), Rabcide (4,5,6,7-tetrachlorophthalolide), Kitazin P® (0,0-diisopropyl-S-benzyl thiophosphate), Hinosan® (0-ethyl-S,S-diphenyl thiophosphate), probenzol (3-allyloxy-1,2-benzisothiazole 1,1-dioxide) and Captan (N-trichloromethylthiotetrahydrophthalimide).

Examples of insecticides include pyrethroid insecticides such as Fenvalerate [α-cyano-3-phenoxybenzyl 2-(4-chlorophenyl)-3-methylbutanoate) and Baytroid® [cyano-4-fluoro-3-phenoxyphenylmethyl 3-(2,2-dichloroethenyl)-2,2-dimethylcyclopropanecarboxylate); organophosphorus insecticides such as DDVP (dimethyl 2,2-dichlorovinyl phosphate), Sumithion [0,0-dimethyl-0-(3-methyl-4-nitrophenyl) thiophosphate], Malathon® (S-[1,2-bis(ethoxycarbonyl)ethyl] dimethyl phosphorothionate), Dimethoate [dimethyl S-(N-methylcarbamoylmethyl) dithiophosphate], Elsan® (S-[α-ethoxycarbonyl)benzyl] dimethyl phosphorothiolthionate) and Baycid® [0,0-dimethyl 0-(3-methyl-4-methylthiophenyl) thiophosphate]; carbamate insecticides such as Bassa® (0-butylphenyl methylcarbamate), MTMC (m-tolyl methylcarbamate), Meobal (3,4-dimethylphenyl N-methylcarbamate) and NAC (1-naphthyl N-methylcarbamate); as well as Methomyl (S-methyl-N-[(methylcarbamoyl)oxylthioacetimide) and Cartap® [1,3-bis(carbamoylthio)-2-(N,N-dimethylamino)propane hydrochloride.

Examples of acaricides include Smite® (2-[2-p-tert-butylphenoxy)isopropoxy]isopropyl 2-chloroethyl sulfide), Acricid (2,4-dinitro-6-sec-butylphenyl dimethylacrylate), Chlormite® (isopropyl 4,4-dichlorobenzilate), Akar (ethyl 4,4-dichlorobenzilate), Kelthane [1,1-bis(p-chlorophenyl)-2,2,2-trichloroethanol), Citrazon® (ethyl 0-benzoyl-3-chloro-2,6-dimethoxybenzohydroxymate), Omite® [2-(p-tert-butylphenoxy)cyclohexyl 2-propynyl sulfite], Osadan® [hexakis(β,β-dimethylphenylethyl)distannoxane], hexithiazoxe [trans-5-(4-chlorophenyl)-N-cyclohexyl-4-methyl-2-oxothiazolidine-3-carboxamide] and Amitraz [3-methyl-1,5-bis(2,4-xylyl)-1,3,5-triazapenta-1,4-diene].

Examples of herbicides include Stam® (3,4-dichloropropionanilide), Saturn® [S (4-chlorobenzyl) N, N-diethylthiolcarbamate], Glyphosate [N-(phosphonomethyl)glycine isopropylamine salt], DCMU [3-(3,4-dichlorophenyl)-1,1-dimethylureal and Glamoxone® (1,1-dimethyl-4,4'-dipyridium dichloride).

Furthermore, plant growth regulators such as MH (maleic acid hydrazide and Ethrel® (2-chloroethylphosphonic acid) may be cited.

The biocide composition of the present invention may further contain one or more plant growth regulators, fertilizers and/or preservatives.

The biocide activator used in the present invention may be added to each of the aforesaid compositions and formulated. Alternatively, it may be diluted in use. The effect of suppressing resistance to biocides, according to the present invention, may be achieved by employing each of these methods.

Although a precise mechanism for the effect of the biocide activator, namely enhancing biocidal effects and suppressing biocide-resistance, is not yet clear, it is thought that the biocide activator may be adsorbed by the cell membrane of a bacterium, thereby disturbing its permeability. Alternatively it may inhibit the activity of membrane-bound enzymes which are localized on the surface of the bacterium, thereby damaging the bacterium and reducing its resistance to biocides. A similar effect was also found to be produced in relation to insecticides and acaricides.

The present invention will now be described by way of example only, with reference to the following Examples.

Table 1 shows the quaternary ammonium salts used in the present invention and Formulation Examples will be given thereafter.

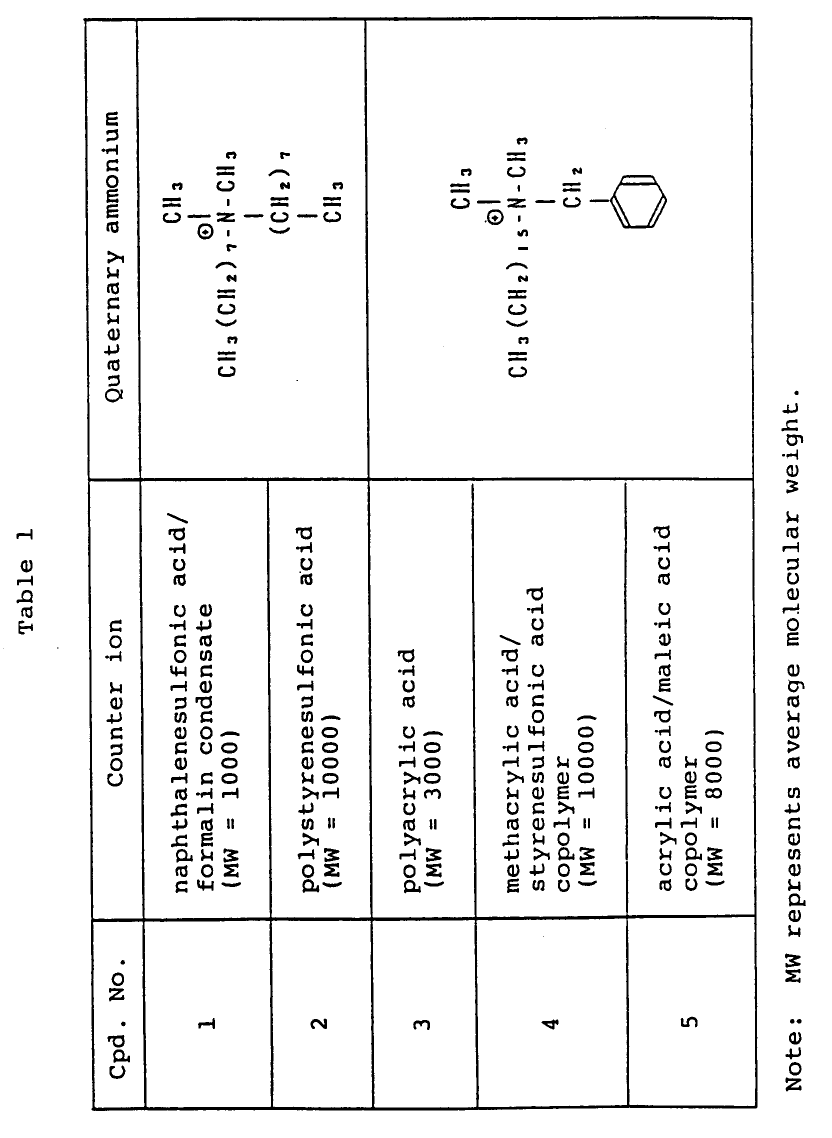

### Formulation Example 1

| | |
|---|---|
| compound No. 1 | 30 (parts by weight) |
| polyoxyethylene nonylphenyl ether (Emulgen 909, mfd. by Kao) | 5 |
| isopropyl alcohol | 65 |

### Formulation Example 2

| | |
|---|---|
| compound No. 2 | 30 (parts by weight) |
| polyoxyethylene nonylphenyl ether (Emulgen 909, mfd. by Kao) | 5 |
| isopropyl alcohol | 65 |

### Formulation Example 3

| | |
|---|---|
| compound No. 3 | 30 (parts by weight) |
| polyoxyethylene nonylphenyl ether (Emulgen 909, mfd. by Kao) | 5 |
| isopropyl alcohol | 65 |

### Formulation Example 4

| | |
|---|---|
| compound No. 4 | 30 (parts by weight) |
| polyoxyethylene nonylphenyl ether (Emulgen 909, mfd. by Kao) | 5 |
| isopropyl alcohol | 65 |

### Formulation Example 5

| | |
|---|---|
| compound No. 5 | 30 (parts by weight) |
| polyoxyethylene nonylphenyl ether (Emulgen 909, mfd. by Kao) | 5 |
| isopropyl alcohol | 65 |

### Formulation Example 6

| | |
|---|---|
| compound No. 1 | 30 (parts by weight) |
| sodium ligninsulfonate | 2 |
| polyoxyethylene nonylphenyl ether (Emulgen 911, mfd. by Kao) | 5 |
| clay | 38 |
| bactericide (Benomyl) | 25 |

### Formulation Example 7

| | |
|---|---|
| compound No. 2 | 30 (parts by weight) |
| clay | 50 |
| polyoxyethylene fatty acid ester | 10 |
| insecticide (Supracid) | 15 |
| potassium nonylphenyl ether sulfate salt (Levenol WZ, mfd. by Kao) | 5 |

### Formulation Example 8

| | |
|---|---|
| compound No. 5 | 20 (parts by weight) |
| clay | 45 |
| polyoxyethylene sorbitan ester (Rheodol TW-0-120, mfd. by Kao) | 5 |
| polyoxyethylene nonylphenyl ether | 5 |
| acaricide (Osadan) | 20 |

### Comparative Formulation Example 1

| | |
|---|---|
| sodium ligninsulfonate | 2 |
| polyoxyethylene nonylphenyl ether (Emulgen 911, mfd. by Kao) | 5 |
| fine clay powder (mfd. by Kunimine Kogyo) | 68 |
| Bactericide (Benomyl) | 25 |

### Comparative Formulation Example 2

| | |
|---|---|
| polyoxyethylene fatty acid ester | 10 |
| sodium nonylphenyl ether sulfate (Levenol WZ, mfd. by Kao) | 5 |
| insecticide (Supracid) | 15 |
| fine clay powder (mfd. by Kunimine Kogyo) | 70 |

### Comparative Formulation Example 3

| | |
|---|---|
| polyoxyethylene sorbitan ester (Rheodol TW-0-120, mfd. by Kao) | 5 |
| polyoxyethylene nonylphenyl ether | 5 |
| fine clay powder (mfd. by Kunimine Kogyo) | 55 |
| acaricide (Osadan) | 20 |

### Example 1

10 ml/pot of a spore suspension (10⁷/ml) of Botrytis cinerea, exhibiting resistence to bacteriocides, was applied to young cucumber seedlings at the trifoliate stage. Next, the seedlings were allowed to stand at 25°C under a relative humidity of 90% for one day. In Test Examples 1 to 5, the biocide activators obtained in the above Formulation Examples 1 to 5 were added to a solution of marketed Benomyl (active ingredient concentration: 250 ppm) in such a manner as to dilute each of the activator 1000-fold. In Test Example 6 and Comparative Test Examples 1 and 2, on the other hand, the dilution was effected in such a manner as to give the content of the active ingredient of Benomyl of 250 ppm. Then each of the obtained samples was applied in a dose of 5 ml per pot. In Comparative Test Example 3, the procedure of Test Example 1 was repeated except that no Benomyl was added.

Next, the seedlings were allowed to stand at 25°C under a relative humidity of 85%. After 4 days, the lesions which had formed on each seedling were counted and the preventive value based on the control group was calculated in accordance with the following equation:$\text{preventive value =} \left(\text{1 -} \frac{\text{lesion number of test group}}{\text{lesion number of control group}}\right) \text{x 100}$ Table 2 shows the results.

**Table 2**

| | | Biocide activator | | Agrohorticultural bactericide | Active ingredient content of Benomyl at application (ppm) | Preventive Value |
|---|---|---|---|---|---|---|
| | | Formulation Example | Dilution | Marketed Benomyl preparation | | |
| Test Example | 1 | Formulation Example 1 | 1000-fold | separately added | 250 | 98 |
| | 2 | Formulation Example 2 | " | " | " | 100 |
| | 3 | Formulation Example 3 | " | " | " | 98 |
| | 4 | Formulation Example 4 | " | " | " | 98 |
| | 5 | Formulation Example 5 | " | " | " | 100 |
| | 6 | Formulation Example 6 | " | none (contained in preparation) | " | 98 |
| Comp. Test Example | 1 | Comp. Formulation Example 1 | " | none (contained in preparation) | 250 | 75 |
| | 2 | none | - | added | 250 | 67 |
| | 3 | Formulation Example 1 | 1000-fold | none | 0 | 35 |

### Example 2

The efficiency of an insecticide (Supracid) was examined by the Chinese cabbage leaf dipping method with the use of Myzus persicae Sulzer imagines (each lot having 30 imagines) by three times.

The preventive value was determined based on the data of a control group.

In Test Examples 1 to 5, the biocide activators obtained in Formulation Examples 1 to 5 were mixed with a 180 ppm solution of marketed Supracid in such a manner as to dilute each of the activators 1000-fold. In Test Example 6 and Comparative Test Examples 1 and 2, on the other hand, the dilution was effected in such a manner as to give a content of the Supracid active ingredient of 180 ppm. In Comparative Test Example 3, the procedure of Test Example 2 was repeated except no Supracid was added.

Table 3 shows the results.

**Table 3**

| | | Biocide activator | | Agrohorticultural bactericide | Active ingreident content of Supracid at application (ppm) | Preventive Value |
|---|---|---|---|---|---|---|
| | | Formulation Example | Dilution | Marketed Supracid preparation | | |
| Test Example | 1 | Formulation Example 1 | 1000-fold | separately added | 180 | 100 |
| | 2 | Formulation Example 2 | " | " | " | 100 |
| | 3 | Formulation Example 3 | " | " | " | 100 |
| | 4 | Formulation Example 4 | " | " | " | 100 |
| | 5 | Formulation Example 5 | " | " | " | 100 |
| | 6 | Formulation Example 7 | " | none (contained in preparation) | " | 100 |
| Comp. Test Example | 1 | Comp. Formulation Example 2 | 1000-fold | none (contained in preparation) | 180 | 66 |
| | 2 | - | - | added | " | 60 |
| | 3 | Formulation Example 2 | 1000-fold | none | 0 | 23 |

### Example 3

Acaricidal effects were examined in a field, wherein Panonychus citri McGregor resistant to marketed acaricide (Osadan) bred, by using three Citrus unshu trees per group.

In Test Examples 1 to 5, the biocide activators obtained in Formulation Examples 1 to 5 were mixed with a 125 ppm solution of the marketed Osadan in such a manner as to dilute each of the activators 1000-fold. In Test Example 6 and Comparative Test Examples 1 and 2, on the other hand, the dilution was effected in such a manner as to give a content of the Osadan active ingredient of 125 ppm. In Comparative Test Example 3, the procedure of Test Example 1 was repeated except no Osadan was added.

Then 3, 10, 20 and 30 days after the treatment with the chemicals, mites on 30 leaves per tree were counted and the preventive value of each group was calculated based on the data obtained in the control lot.

Table 4 shows the results.

**Table 4**

| | | Biocide activator | | Agrohorticultural acaricide | Active ingredient content of Osadan at application (ppm) | Preventive Value |
|---|---|---|---|---|---|---|
| | | Formulation Example | Dilution | Marketed Osadan preparation | | |
| Test Example | 1 | Formulation Example 1 | 1000-fold | separately added | 125 | 99 |
| | 2 | Formulation Example 2 | " | " | " | 99 |
| | 3 | Formulation Example 3 | " | " | " | 97 |
| | 4 | Formulation Example 4 | " | " | " | 100 |
| | 5 | Formulation Example 5 | " | " | " | 100 |
| | 6 | Formulation Example 8 | " | none (contained in preparation) | " | 98 |
| Comp. Test Example | 1 | Comp. Formulation Example 1 | 1000-fold | none (contained in preparation) | 125 | 45 |
| | 2 | none | - | separately added | " | 46 |
| | 3 | Formulation Example 3 | 1000-fold | none | 0 | 38 |

### Example 4

The effect of the biocide activator used in the present invention on plants was examined in the following manner. Namely, cucumber, kidney bean, tomato, eggplant and strawberry plants were grown in a green-house and the effect of the compound on fruits and leaves of these crops was examined.

Table 5 shows the results.

**Table 5**

| Test Example | | Dilution | Test crop | | | | |
|---|---|---|---|---|---|---|---|
| | | | cucumber | kidney bean | tomato | eggplant | strawberry |
| Compound of the invention | 1 | x 1000 | none | none | none | none | none |
| | | x 500 | " | " | " | " | " |
| | 2 | x 1000 | none | none | none | none | none |
| | | x 500 | " | " | " | " | " |
| | 3 | x 1000 | none | none | none | none | none |
| | | x 500 | " | " | " | " | " |
| | 4 | x 1000 | none | none | none | none | none |
| | | x 500 | " | " | " | " | " |
| | 5 | x 1000 | none | none | none | none | none |
| | | x 500 | " | " | " | " | " |

### Results

As the Examples 1 to 4 show, the biocide activator used in the present invention apparently enhances biocidal effects without any adverse effects on crops.

## Claims

1. A biocide composition which comprises a biocide activated by a biocide activator having the formula (1): 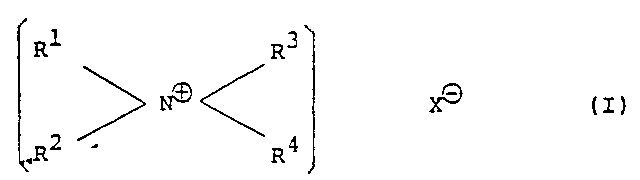 wherein at least one of R¹, R², and R³ represents a straight-chain or branched alkyl or alkenyl group having 8 to 30 carbon atoms while other(s) represent a group or a combination selected from among -CH₃, -CH₂CH₃, 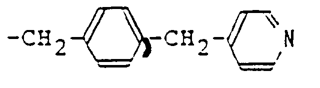 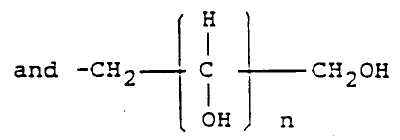 groups (wherein n ranges from 1 to 5;
R⁴ represents a -CH₃ or -CH₂CH₃ group; and
a counter ion X^{⊖} is an anion residue of an acid of an anionic oligomer or polymer having an average molecular weight of from 300 to 20,000 and selected from:
1) a polymer comprising one or more monomers selected from unsaturated carboxylic acids and derivatives thereof as an essential component;
2) a polymer comprising styrenesulfonic acid as an essential constituting monomer; and
3) a formalin condensate of a sulfonate of a polycyclic aromatic compound optionally having a hydrocarbon group as a substituent.

2. An aqueous-biocide solution which comprises an biocidally effective amount of a biocide, the biocide activator as defined in Claim 1 and water.

3. The solution as claimed in Claim 2, which comprises 0.01 to 60 percent by weight of the biocide activator.

4. A biocide composition as claimed in any preceding claim in which the solution further comprises an additive selected from salts, surfactants, thickeners and carriers.

5. Use of a biocidal activator as defined in Claim 1 for the activation of a biocide.

## Patentansprüche

1. Biozidzusammensetzung umfassend ein durch einen Biozidaktivator der Formel (I) aktiviertes Biozid: 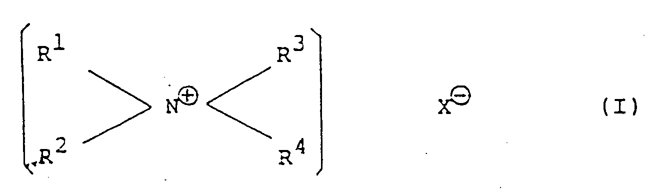 worin wenigstens eines von R¹, R² und R³ eine geradkettige oder verzweigte Alkyl- oder Alkenylgruppe mit 8 bis 30 Kohlenstoffatomen bedeutet, während das (die) andere(n) eine Gruppe oder eine Kombination bedeutet, ausgewählt aus - CH₃, -CH₂CH₃, 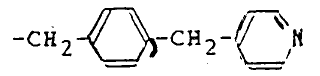 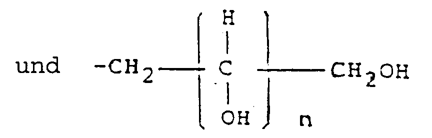 Gruppen (worin n im Bereich von 1 bis 5 liegt);
R⁴ bedeutet eine -CH₃ oder -CH₂CH₃ Gruppe und ein Gegenion X^{θ} stellt einen Anionenrest einer Säure eines anionischen Oligomers oder Polymers mit einem durchschnittlichen Molekulargewicht von 300 bis 20 000 dar, ausgewählt aus
1) einem Polymer umfassend ein oder mehrere Monomere, ausgewählt aus ungesättigten Carbonsäuren und deren Derivaten als wesentliche Komponente;
2) einem Polymer, umfassend Styrolsulfonsäure als wesentliches Aufbaumonomer; und
3) einem Formalinkondensat eines Sulfonats einer polycyclischen aromatischen Verbindung, welche gegebenenfalls eine Kohlenwasserstoffgruppe als einen Substituenten bestitzt.

2. Wäßrige Biozidlösung, umfassend eine biozidwirksame Menge eines Biozids, den Biozidaktivator, wie in Anspruch 1 definiert, und Wasser.

3. Lösung nach Anspruch 2, umfassend 0,01 bis 60 Gew.-% des Biozidaktivators.

4. Biozidzusammensetzung nach einem der vorhergehenden Ansprüche, worin die Lösung weiterhin ein Additiv umfaßt, ausgewählt aus Salzen, oberflächenaktiven Mitteln, Verdickungsmitteln und Trägern.

5. Verwendung eines bioziden Aktivators, wie in Anspruch 1 definiert, für die Aktivierung eines Biozids.

## Revendications

1. Composition biocide, comprenant un biocide activé par un activateur de biocide de formule (1) : 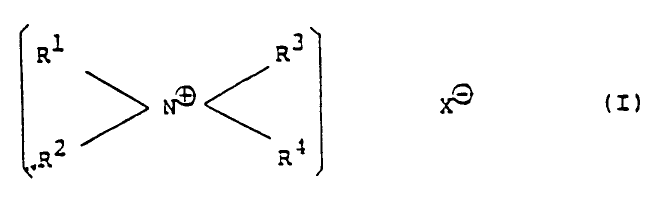 dans laquelle au moins l'un des groupes R¹, R² et R³, représente un groupe alkyle ou alcényle ramifié ou à chaîne linéaire comportant de 8 à 30 atomes de carbone, tandis que le ou chaque autre représente un groupe ou un ensemble de groupes choisis parmi -CH₃, -CH₂CH₃, 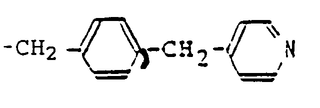 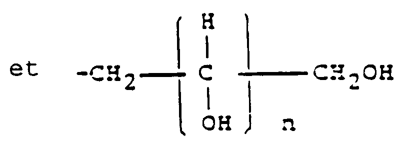 (n variant de 1 à 5) ;
R⁴ représente un groupe -CH₃ ou -CH₂CH₃ ; et le contre-ion X⁽⁻⁾ est un groupe anionique dérivé d'un acide, d'un oligomère ou d'un polymère anionique ayant un poids moléculaire moyen de 300 à 20 000, et choisi parmi :
1) un polymère comprenant un ou plusieurs monomères choisis parmi les acides carboxyliques insaturés et leurs dérivés comme composant essentiel ;
2) un polymère comprenant de l'acide styrène sulfonique comme monomère constituant essentiel ; et
3) un produit de condensation avec la formaline d'un sulfonate dérivé d'un composé aromatique polycyclique comportant éventuellement un groupe hydrocarboné comme substituant.

2. Solution aqueuse de biocide, comprenant une quantité efficace de manière biocide, d'un biocide, l'activateur de biocide étant tel que défini dans la revendication 1, et de l'eau.

3. Solution selon la revendication 2, comprenant de 0,01 à 60 % en poids de l'activateur de biocide.

4. Composition de biocide selon l'une quelconque des revendications précédentes, dans laquelle la solution comprend en outre un additif choisi parmi les sels, les tensioactifs, les épaississants et les véhicules.

5. Utilisation d'un activateur de biocide selon la revendication 1 pour l'activation d'un biocide.
